# DEMANDE DE BREVET EUROPEEN

(11) **EP 1 060 831 A1**
(43) Date de publication de la demande: **20.12.2000**
(21) Numéro de dépôt: 00440175.8
(22) Date de dépôt: 14.06.2000
(51) Int. Cl.: B23Q 39/04, B23Q 7/14, B23Q 7/02

(54) **Dispositif de transfert de pièces à usiner**

(30) Priorité: 18.06.1999 FR 9907903
(71) Demandeur: Société pour Faciliter les Operations Mecaniques (S.F.O.M.) S.R.L., 25500 Morteau (FR)
(72) Inventeur: Parvaud, Daniel, 25870 Tallenay (FR)
(74) Mandataire: Rhein, Alain

(57) **Abrégé**

L'invention a trait à un dispositif de transfert de pièces à usiner permettant de réaliser l'ensemble des usinages d'une pièce sur une même machine sans reprise, comportant un moyen permettant de déplacer des palettes portant chacune une pièce à usiner en les faisant pivoter autour d'un axe vertical pour les positionner successivement à chacun des postes de travail répartis autour dudit axe.

Ce dispositif comporte un moyen (4) apte à déplacer les palettes (2) radialement à l'axe vertical (X) dans un mouvement d'aller et retour entre chacune des opérations de pivotement pour les amener aux postes de travail (A, B, C, D) en sorte que lors des opérations de pivotement les palettes (2) soient à proximité de l'axe vertical (X).

## Description

La présente invention a pour objet un dispositif de transfert de pièces à usiner permettant de réaliser l'ensemble des usinages d'une pièce sur une même machine sans reprise.

Dans le domaine industriel, la fabrication de certaines pièces nécessite plusieurs usinages. Sur un poste de travail une pièce n'est en général usinée que sur un seul côté, voire deux, aussi l'ensemble des usinages d'une pièce nécessite le transfert de ladite pièce d'un poste à un autre tout en gérant le retournement éventuel de ladite pièce, jusqu'à ce que tous les côtés de celle-ci soient usinés.

La présente invention a pour but d'automatiser le transfert des pièces d'un poste à un autre tout en rationalisant l'occupation au sol.

On connaît déjà des dispositifs permettant de transférer une pièce d'un poste d'usinage à un autre, c'est par exemple le cas de celui décrit dans le document EP 0.409.085, qui comporte des moyens permettant de saisir deux palettes sur chacune desquelles est fixée une pièce à usiner, et d'échanger les positions desdites palettes et éventuellement de faire pivoter celles-ci, pour les présenter alternativement à deux postes différents d'usinage. Ce dispositif présente l'inconvénient de ne pas permettre d'usiner tous les côtés des pièces, en sorte que pour atteindre ce but il est nécessaire d'utiliser au moins deux de ces dispositifs et de prévoir un système de transfert des pièces de l'un à l'autre.

On connaît également par le document EP 0.529.465 un dispositif permettant de faire passer des pièces de poste en poste par l'intermédiaire d'un carrousel. Les pièces sont placées sur des palettes fixées sur le carrousel, le passage d'un poste à un autre étant réalisé par la succession des opérations suivantes, soulèvement du carrousel pour saisir les palettes, pivotement puis abaissement dudit carrousel pour déposer les palettes à chacun des postes de travail.

Le mode de fonctionnement de ce dispositif nécessite une architecture lourde pour pouvoir soulever et faire tourner l'ensemble du carrousel et des palettes alors que celles-ci sont très éloignées de l'axe de pivotement. En effet, à partir d'un certain nombre de postes de travail, ceux-ci doivent être relativement éloignés de l'axe de pivotement, en sorte que plus les postes sont nombreux plus les bras du carrousel doivent être longs et de conception robuste, et plus le couple de rotation doit être important.

Par ailleurs il n'est pas prévu de faire pivoter les palettes pour que les pièces présentent éventuellement un côté différent à un poste de travail. En outre ce dispositif occupe une importante surface au sol.

On connaît également par le document SU 1.425.050 un dispositif de production automatique utilisant des satellites montés en rotation autour d'une tourelle, et aptes à se déplacer verticalement pour charger ou décharger les pièces à usiner. Si ce dispositif peut être d'un encombrement limité, il est toutefois également de conception complexe et lourde, notamment du fait de l'emploi de vérins hydrauliques nécessaires à la réalisation des déplacements verticaux.

La présente invention a pour but de proposer un dispositif de transfert de pièces à usiner permettant de réaliser l'ensemble des usinages d'une pièce sur une même machine sans reprise, et qui ne présente pas les inconvénients des dispositifs précités.

Le dispositif de transfert de pièces à usiner objet de la présente invention comporte un moyen permettant de déplacer des palettes portant chacune une pièce à usiner en les faisant pivoter autour d'un axe vertical pour les positionner successivement à chacun des postes de travail répartis autour dudit axe, et il se caractérise essentiellement en ce qu'il comporte un moyen apte à déplacer lesdites palettes radialement audit axe vertical dans un mouvement d'aller et retour entre chacune des opérations de pivotement pour les amener auxdits postes de travail, en sorte que lors desdites opérations de pivotement lesdites palettes soient à proximité dudit axe vertical.

Selon une caractéristique additionnelle du dispositif selon l'invention, il comporte des moyens permettant de faire éventuellement pivoter les palettes sur elles-mêmes lors de leur pivotement autour de l'axe vertical.

Selon une autre caractéristique additionnelle du dispositif selon l'invention, le moyen apte à déplacer les palettes radialement à l'axe vertical de pivotement comporte d'une part un pignon moteur coaxial audit axe vertical, sur lequel s'engrènent des pignons périphériques portant chacun une manivelle sur laquelle s'articule une bielle reliée à un bras mobile en coulissement entre ledit axe et un poste de travail et sur lequel est solidarisable une palette; et d'autre part un plateau mobile en pivotement autour dudit axe vertical, sur lequel sont susceptibles de se fixer, chacune par l'intermédiaire d'un support, lesdites palettes lorsqu'elles quittent lesdits bras.

Selon une autre caractéristique additionnelle du dispositif selon l'invention, chacune des palettes est liée au support qui la relie au plateau par l'intermédiaire d'un pignon d'axe vertical engrené sur une crémaillère apte à se déplacer dans ledit support radialement à l'axe de pivotement des palettes par l'intermédiaire d'un galet qu'elle porte et qui, lors du pivotement du plateau, glisse dans un chemin de came fixe.

Selon une autre caractéristique additionnelle du dispositif selon l'invention, il comporte des moyens permettant de maintenir les palettes parfaitement alignées horizontalement avec les postes de travail.

Selon une autre caractéristique additionnelle du dispositif selon l'invention, le moyen permettant de maintenir les palettes alignées avec les postes de travail consiste en des vérins aptes à venir soutenir les palettes entre chacune opération de pivotement de celle-ci autour de l'axe vertical.

Selon une autre caractéristique additionnelle du dispositif selon l'invention, il comporte un moyen apte à maintenir les palettes lors du pivotement de celles-ci autour de l'axe vertical.

Le dispositif de transfert selon l'invention est de conception simple puisqu'il ne fait intervenir que des moyens mécaniques à cames, qui lui assurent une fiabilité des mouvements, permettant le parfait positionnement des palettes aux postes de travail.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :

La figure 1 représente une vue schématique en plan d'une installation d'usinage équipée d'un dispositif de transfert de pièces à usiner selon l'invention.

La figure 2 représente une vue schématique en perspective d'une partie du même dispositif.

La figure 3 représente une vue schématique partielle en perspective d'une autre partie du même dispositif.
La figure 4 représente une vue schématique en perspective et en éclaté d'une autre partie du même dispositif.

La figure 5 représente une vue partielle en élévation et en coupe d'une autre partie du même dispositif.

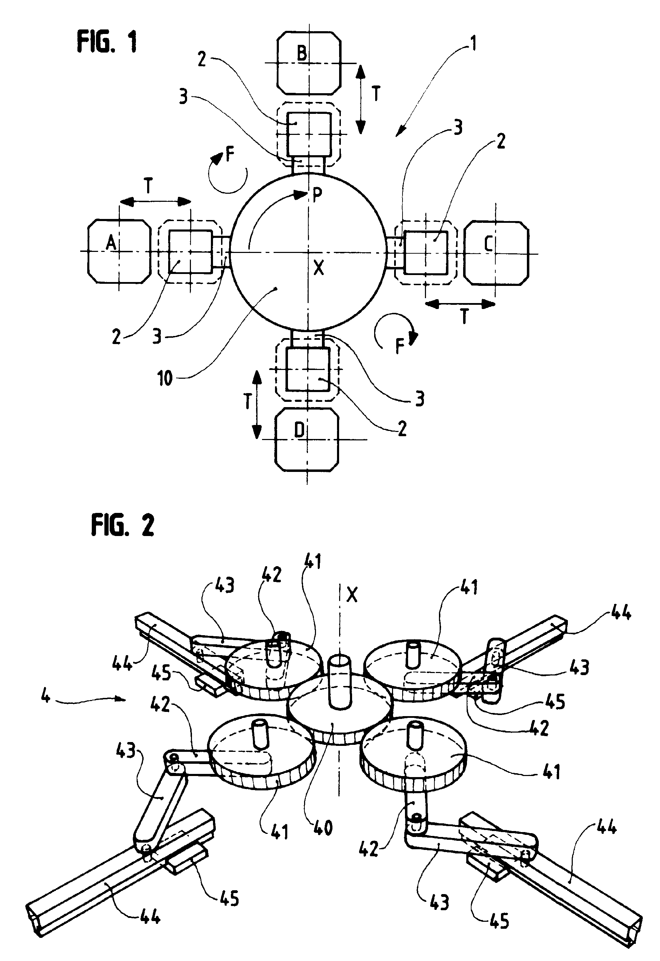

En référence à la figure 1, on peut voir une installation d'usinage de pièces équipée d'un dispositif de transfert 1 selon l'invention.

L'installation représentée comporte trois postes de travail, à savoir trois d'usinage A, B et C et un poste de chargement D. Le dispositif de transfert 1 selon l'invention comporte un plateau 10 mobile en pivotement autour d'un axe X selon la flèche P, et il porte quatre palettes 2 par l'intermédiaire de supports 3, lesquels sont régulièrement espacés angulairement, chacune des palettes 2 étant destinée à porter une pièce à usiner.

On notera que de manière classique les pièces à usiner sont bridées sur les palettes 2 par l'intermédiaire de vérins hydrauliques commandés par un système d'accouplement automatiques.

Il y a lieu de remarquer qu'il est possible de concevoir un dispositif de transfert selon l'invention adapté à une installation comportant un nombre différent de postes d'usinage, il conviendra toutefois de respecter un écart angulaire identique entre les palettes 2.

Par ailleurs, les palettes 2 sont, par l'intermédiaire d'un moyen 4 non visible sur la figure et représenté sur la figure 2, mobiles en déplacement radial par rapport à l'axe X selon les flèches double T, et peuvent être solidarisées soit au plateau 10 par l'intermédiaire des supports 3, soit aux postes d'usinage A, B et C ou de chargement D, par l'intermédiaire de mandrins, non représentés.
Sachant qu'au départ d'un cycle les palettes 2 sont chacune à un poste, la cinématique du dispositif de transfert 1 selon l'invention est la suivante:
- translation des palettes 2 vers le plateau 10 auquel elles se solidarisent par l'intermédiaire des supports 3,
- rotation du plateau 10 de 90° pour indexer les palettes 2 en regard des postes suivants,
- translation des palettes 2 vers les postes auxquels elles se solidarisent.

Le dispositif de transfert 1 selon l'invention permet ainsi de faire pivoter les palettes 2 d'un poste à autre sans nécessiter un couple important puisque l'essentiel de la charge est proche de l'axe X lors du pivotement. D'autre part il n'a pas besoin d'être de conception aussi robuste que les dispositifs existants.

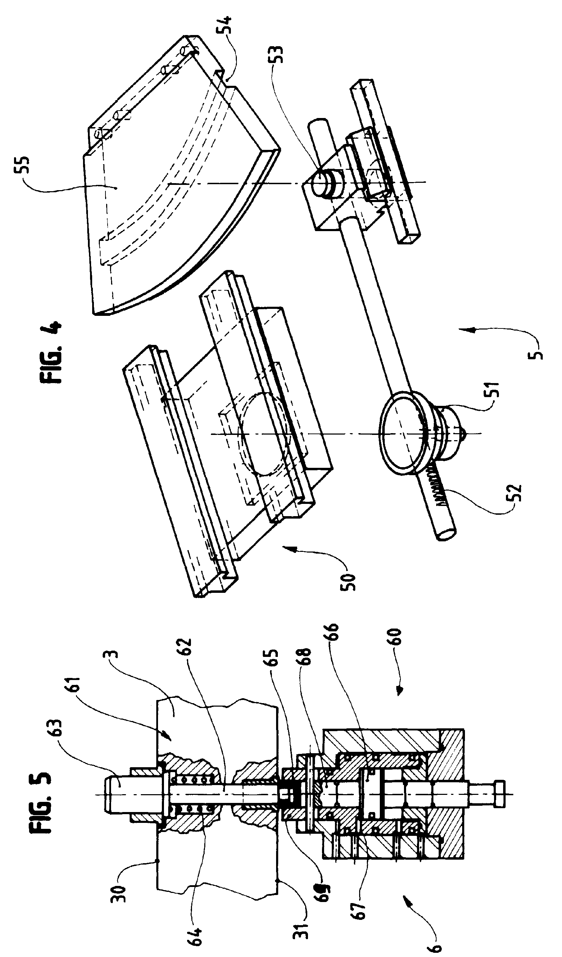

Par ailleurs, le dispositif de transfert 1 selon l'invention permet également, par l'intermédiaire d'un moyen 5 non visible sur la figure et représenté sur la figure 4, de faire éventuellement pivoter les palettes 2 sur elles-mêmes, simultanément à la rotation du plateau 10 en utilisant cette rotation.

Dans l'installation représentée, il est prévu de faire pivoter les palettes 2 sur elles-mêmes lors du passage du poste A au poste B et du poste C au poste D.

Ce pivotement secondaire permet de présenter les pièces sous un autre angle et donc d'usiner d'autres côtés de celles-ci.

Si on se réfère maintenant à la figure 2, on peut voir le moyen 4 du dispositif de transfert 1 selon l'invention permettant les translations radiales simultanées des palettes 2, non représentées.
Ce moyen 4 comporte un pignon moteur 40 coaxial à l'axe X, sur lequel s'engrènent quatre pignons périphériques 41 portant chacun une manivelle 42 sur l'extrémité libre de laquelle s'articule l'extrémité d'une bielle 43 dont l'autre extrémité s'articule sur un bras 44 mobile en coulissement dans un sens radial à l'axe X, dans un guide 45.

Les bras 44 sont chacun destinés à porter une palette 2 pour la transférer du plateau 10 à un poste, et inversement.

En effet, on comprendra que la rotation du pignon moteur 40 entraîne simultanément les pignons périphériques 41 avec pour conséquence un mouvement d'aller et retour des bras 44 lors d'une rotation complète des pignons périphériques 41.

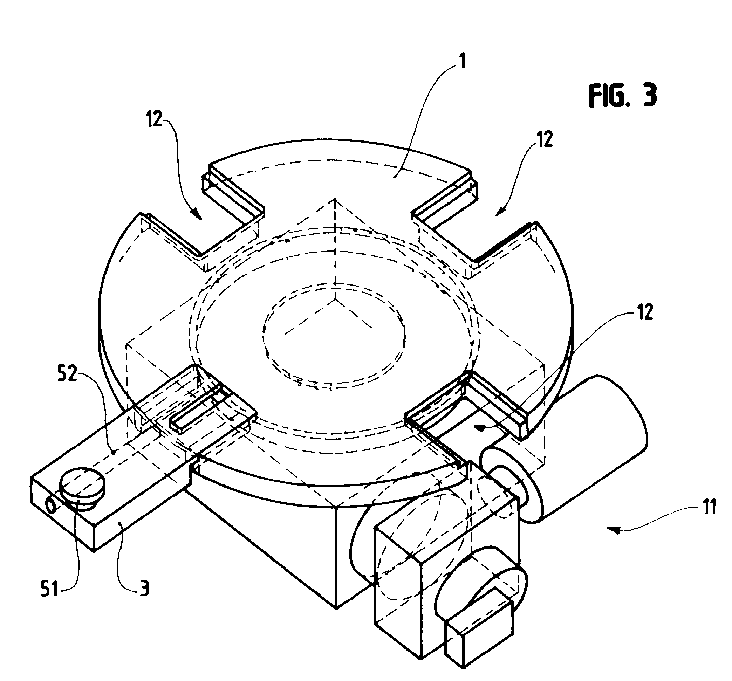

En référence maintenant à la figure 3, on peut voir le plateau 10 du dispositif de transfert 1 selon l'invention.

Le plateau 10 est entraîné en rotation par l'intermédiaire d'un indexeur à came 11 de type connu qui ne sera donc pas décrit.

Il présente par ailleurs quatre encoches 12 espacées de 90° destinées à recevoir chacune un support 3, dont un seul est représenté.

En référence maintenant à la figure 4, on peut voir le moyen 5 permettant de faire pivoter une palette 2 sur elle-même pendant son transfert d'un poste à un autre.

Le moyen 5 comporte une plaque 50 destinée à être intercalée entre le support 3, non représenté, et la palette 2, également non représentée, en étant solidarisée à cette dernière.

Comme cela est visible sur la figure 3, le moyen 5 est en partie positionné dans le support 3, il comprend un pignon 51 d'axe vertical, mobile en pivotement libre dans le support 3, solidaire en rotation de la plaque 50 et engrené sur une crémaillère 52 mobile en déplacement dans un sens radial à l'axe X, non visible, dont l'extrémité disposée du côté de l'axe XX comporte un galet 53 engagé dans un chemin de came 54 pratiqué dans une plaque 55 solidaire du bâti, non représenté, du dispositif 1.

Lors de la rotation du plateau 10, le support 3 est entraîné en rotation en sorte que le galet 53, en suivant le chemin de came 54, entraîne en translation la crémaillère 52 qui fait tourner le pignon 51 et donc la plaque 50 et la palette 2.

Il est ainsi possible de faire pivoter la pièce à usiner, ce pivotement étant fonction de la forme du chemin de came 54 et du diamètre du pignon 51.

Les plaques 55 sont montées démontables en sorte qu'il est possible d'en équiper ou non le bâti entre deux postes de travail.

En outre, les plaques 55 peuvent comporter des chemins de came 54 différents afin d'obtenir des pivotements d'angles différents.

Si on se réfère maintenant à la figure 5, on peut voir un système 6 permettant de maintenir une palette 2 sur son support 3, et qui aligne celui-ci avec le mandrin du poste de travail en regard.

En effet, lors de la rotation du plateau 10, si les palettes ne sont pas maintenues sur les supports 3 la force centrifuge risque de les évacuer. En outre, lorsque les palettes 2 sont sur les supports 3, ceux-ci fléchissent de quelques dixièmes de millimètre, ce fléchissement disparaissant lorsque les palettes 2 sont transférées vers les postes de travail où elles sont prises en charge par les mandrins. Or il est primordial que le plateau 10 soit à tout moment aligné avec les mandrins pour permettre la translation.
Le système 6 comprend deux parties, une partie 60 solidarisée fixement au sol et une partie 61 logée dans le support 3.

La partie 61 comprend une tige 62 qui traverse verticalement le support 3 dans lequel celle-ci est mobile axialement de manière limitée et elle comporte d'une part à son extrémité supérieure un insert conique 63 apte à faire saillie du plan supérieur 30 du support 3 pour s'engager dans un logement pratiqué dans la palette 2, non représentée, l'insert 63 étant maintenu dans cette position par un ressort 64, et, d'autre part, à son extrémité inférieure, qui fait saillie du plan inférieur 31 du support 3, un embout préhensile 65.

La partie fixe 60 comporte deux vérins coaxiaux, un vérin intérieur 66 et un vérin extérieur 67, tels que l'extrémité libre de la tige 68 du vérin intérieur 66 puisse accrocher l'embout de préhensile 65 lorsque le plateau 10 s'arrête de tourner, et que la tige 69 du vérin extérieur puisse venir en butée contre le plan inférieur 31 du support 3.

Lorsque le plateau 10 est en rotation, l'insert conique 63 est maintenu en saillie par le ressort 64 et maintient la palette 2 sur le support 3.

On notera qu'avantageusement la tige 62 traverse axialement le pignon 51 du moyen 5 permettant de faire pivoter la palette 2 sur elle-même, afin que l'insert 63 n'entrave pas ce pivotement.

Lorsque le plateau 10 est arrêté, les parties 60 et 61 sont dans le prolongement l'une de l'autre et la tige 62 et solidarisée à la tige 68 du vérin intérieur 66 par l'intermédiaire de l'embout préhensile 65. La rentrée de la tige 68 du vérin intérieur 66 entraîne la rentrée de l'insert conique 63 qui libère la palette qui peut être transférée au poste de travail, tandis que simultanément la tige 69 du vérin extérieur 67 vient au contact du support 3 et compense la masse de la palette 2 pour réaliser l'alignement de celle-ci avec le mandrin du poste de travail.

Après le retour de la palette 2 sur le support 3, la sortie de la tige 68 du vérin intérieur provoque la sortie de l'insert conique 63 dans la palette qui est alors maintenue et peut être entraînée par le plateau 10.

## Revendications

1. Dispositif de transfert de pièces à usiner permettant de réaliser l'ensemble des usinages d'une pièce sur une même machine sans reprise, comportant un moyen permettant de déplacer des palettes portant chacune une pièce à usiner en les faisant pivoter autour d'un axe vertical pour les positionner successivement à chacun des postes de travail répartis autour dudit axe, caractérisé en ce qu'il comporte un moyen (4) apte à déplacer lesdites palettes (2) radialement audit axe vertical (X) dans un mouvement d'aller et retour entre chacune des opérations de pivotement pour les amener auxdits postes de travail (A, B, C, D) en sorte que lors desdites opérations de pivotement lesdites palettes (2) soient à proximité dudit axe vertical (X).

2. Dispositif selon la revendication 1, caractérisé en ce qu'il comporte des moyens (5) permettant de faire éventuellement pivoter les palettes (2) sur elles-mêmes lors de leur pivotement autour de l'axe vertical (X).

3. Dispositif selon la revendication 1 ou la revendication 2, caractérisé en ce que le moyen apte à déplacer les palettes (2) radialement à l'axe vertical de pivotement (X) comporte d'une part un pignon moteur (40) coaxial audit axe vertical (X), sur lequel s'engrènent des pignons périphériques (41) portant chacun une manivelle (42) sur laquelle s'articule une bielle (43) reliée à un bras (44) guidé et mobile en coulissement entre ledit axe (X) et un poste de travail (A, B, C, D) et sur lequel est solidarisable une palette (2); et d'autre part un plateau (10) mobile en pivotement autour dudit axe vertical (X), sur lequel sont susceptibles de se fixer, chacune par l'intermédiaire d'un support (3), lesdites palettes (2) lorsqu'elles quittent lesdits bras (44).

4. Dispositif selon la revendication 3, caractérisé en ce que chacune palette (2) est liée au support (3) qui la relie au plateau (10) par l'intermédiaire d'un pignon (51) d'axe vertical engrené sur une crémaillère (52) apte à se déplacer dans ledit support (3) radialement à l'axe (X) de pivotement des palettes (2) par l'intermédiaire d'un galet (53) qu'elle porte et qui, lors du pivotement dudit plateau (10), glisse dans un chemin de came fixe (54).

5. Dispositif selon l'une quelconque des revendications précédentes, caractérisé en ce qu'il comporte des moyens (6) permettant de maintenir les palettes (2) parfaitement alignées horizontalement avec les postes de travail( A, B, C, D).

6. Dispositif selon la revendication 5, caractérisé en ce que le moyen (6) permettant de maintenir les palettes (2) alignées avec les postes de travail (A, B, C, D) consiste en des vérins (67) aptes à venir soutenir lesdites palettes (2) entre chacune opération de pivotement de celles-ci autour de l'axe vertical (X) .

7. Dispositif selon l'une quelconque des revendications précédentes, caractérisé en ce qu'il comporte un moyen (63) apte à maintenir les palettes (63) lors du pivotement de celles-ci autour de l'axe vertical (X).
